# EUROPEAN PATENT SPECIFICATION

(11) **EP 2 256 995 B1**
(45) Date of publication and mention of the grant of the patent: **12.03.2014**
(21) Application number: 10163113.3
(22) Date of filing: 18.05.2010
(51) Int. Cl.: H04L 12/46

(54) **Loop detection method, system, and device in virtual private local area network**
Schleifendetektionsverfahren, System und Vorrichtung in virtuellen privaten lokalen Netzwerken
Procédé de détection de boucle, système et dispositif dans un réseau local privé virtuel

(30) Priority: 27.05.2009 CN 200910085698
(43) Date of publication of application: 01.12.2010
(73) Proprietor: Huawei Technologies Co., Ltd., Shenzhen, Guangdong 518129 (CN)
(72) Inventor: Zhang, Yuyang, 518129, Shenzhen Guangdong (CN)
(74) Representative: Isarpatent

(56) References cited:
- WO-A2-03/077459
- WO-A2-2007/084696

## Description

### FIELD OF THE TECHNOLOGY

The present invention relates to the field of communications, and more particularly to a loop detection method, system, and device in a virtual private local area network.

### BACKGROUND OF THE INVENTION

As the communications technology is continuously developed, the Ethernet is widely used because it is simple and convenient, has a low price and a high speed, and can be easily configured and deployed. However, the network topology structure of the Ethernet is quite complicated, and a loop is easily generated, resulting in a broadcast storm.

The virtual private local area network (LAN) services (VPLS) technology is an Ethernet-based service that allows users to access the Ethernet at the same time from points distributed in multiple geographical positions and access one another, so that the deployment of Ethernet LANs is not geographically limited. The VPLS enables LANs of customers to extend to a metropolitan area network (MAN) or even wide area network (WAN).

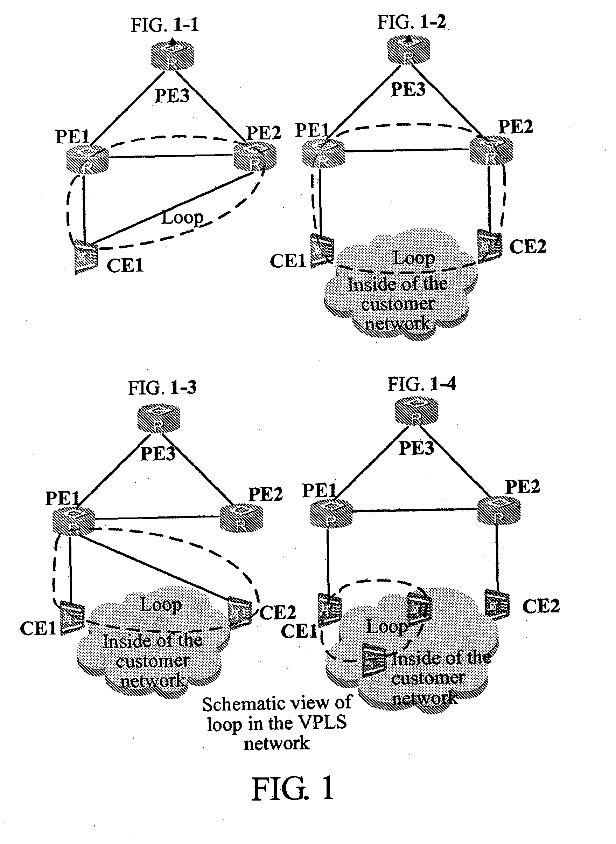

In the Ethernet accessing the VPLS, in order to prevent a single point failure from affecting services, link redundancy backup is required, which may result in the loop of the paths. Therefore, the broadcast storm occurs. Referring to FIG. 1, the customer side network cannot be known or controlled by the provider under some situations. In the scenario 1-1 shown in FIG. 1, in order to prevent the single point failure, a customer edge (CE) 1 accesses two provider edges (PEs) PE1 and PE2 through dual-homing redundancy, so the loop is generated as indicated by the dashed lines. In the scenario 1-2, the PE1 and PE2 respectively access the CE1 and CE2 at two points, but the customer network is communicated inside, that is, the CE1 and the CE2 communicate with each other, so the loop is generated among the CE1 and CE2, and the PE1 and PE2. In the scenario 1-3, the PE1 accesses two different CEs, that is, the CE1 and CE2, but the customer side network is communicated inside, such that the loop is generated among the CE1 and CE2, and the PE1. In the scenario 1-4, the provider device PE1 accesses the CE1, but the loop occurs in the CE1. In the four scenarios of FIG. 1, the broadcast storm occurs due to the loop, and the broadcast storm may be diffused into the provider. Therefore, the loops need to be eliminated through some loop eliminating techniques.

Currently, general loop eliminating techniques mainly include the Spanning Tree Protocol (STP), and the Multiple Spanning Tree Protocol (MSTP) and Rapid Spanning Tree Protocol (RSTP) based on the STP, in which computation is performed through switching of a bridge protocol data unit (BPDU), and then a tree structure is generated after the computation, thereby eliminating the loop of the network. Usually, the STP is deployed on the customer side network to ensure that redundancy links accessing to the VPLS do not form the loops, so as to prevent the broadcast storm in the provider network.

In addition, a Smart Link (also referred to as backup link) technique is provided, to implement redundancy backup and rapid migration of active and standby links for dual-uplink networking.

The prior art has at least the following problems.

Currently, the STP technology for solving the loop problem requires the deployment on loop-related devices, that is, the relevant technique needs to be deployed on the PEs of the provider side and the CEs of the customer side network, so that whether the provider network generates the broadcast storm depends on whether the deployment on the customer side network is correct. When the STP is not configured on the CEs of the customer side network, or the CEs of the customer side network do not support the STP, or the PEs cannot transparently transmit the STP protocol packet, the loop becomes inevitable.

When the Smart Link technique is adopted, if the CEs of the customer side network do not support or do not deploy the Smart Link, the loop is also inevitable.

Document D1 (WO 03/077459) discloses a method for rapid traffic recovery and loop avoiding in ring topologies. According to D1, there is a master bridge in a ring, wherein the master bridge has a first port and a second port, the ring has a ring identifier, each ports on the ring shares the same ring identifier. The first port transmits RPDUs with its ring identifier to the second port, the second port receives the RPDUs with the ring identifier. If the number of the RPDUs received by the second port within a given time frame is greater than a preset number, the master bridge blocks the second port.

### SUMMARY OF THE INVENTION

The present invention is directed to a loop detection method, system, and device in a virtual private LAN, to solve the problem that the loop detection technique in a VPLS network depends on the deployment on a customer side network, and effectively prevent a loop from occurring in a provider network.

According to a first aspect of the present invention, a loop detection method in a virtual private LAN is provided, which includes the following steps.

A first PE of the virtual private LAN generates a loop detection packet which carries a sending interval of the loop detection packet and a block priority of a link between the first PE and a CE.

The first PE sends the loop detection packet to the CE according to the sending interval.

If the first PE receives the loop detection packet, the first PE blocks the link between the first PE and the CE.

According to a second aspect of the present invention, further a loop detection system in a virtual private LAN is provided, which includes a first PE and a CE.

The first PE is configured to generate a loop detection packet which carries a sending interval of the loop detection packet and a block priority of a link between the first PE and the CE, send the loop detection packet to the CE according to the sending interval, and block the link between the first PE and the CE if the first PE receives the loop detection packet.

The CE is configured to receive the loop detection packet sent by the first PE, and send the loop detection packet to the first PE through a loop if the loop exists between the CE and the first PE.

According to a third aspect of the present invention, further a loop detection device in a virtual private LAN is provided, which includes a generating module, a sending module, and a first receiving module.

The generating module is configured to generate a loop detection packet which carries a sending interval of the loop detection packet and a block priority of a link between the PE and a CE.

The sending module is configured to send the loop detection packet to the CE according to the sending interval.

The first receiving module is configured to block the link between the PE and the CE if receiving the loop detection packet.

In the technical solutions according to the different aspects of the present invention, the first PE sends the loop detection packet for the CE network through the link between the first PE and the CE. If a second PE or the first PE receives the loop detection packet, it is determined that a loop exists between the CE and the PE. In this case, one of the links may be blocked, to isolate a broadcast storm of the customer in the customer side network, thereby solving the problem that the existing loop detection technique in the VPLS network depends on the deployment on the customer side network.

### BRIEF DESCRIPTION OF THE DRAWINGS

FIG. 1 is a schematic diagram of a loop in an existing VPLS network;
FIG. 2 is a schematic flow chart of a method according to Embodiment 1 of the present invention;
FIG. 3 is a schematic flow chart of a method according to Embodiment 2 of the present invention;
FIG. 4 is a schematic diagram of the format of a loop detection packet according to Embodiment 2 of the present invention;
FIG. 5 is a schematic diagram of a common block releasing process according to Embodiment 2 of the present invention;
FIG. 6 is a schematic structural view of a system according to Embodiment 3 of the present invention; and
FIG. 7 is a schematic structural view of a device according to Embodiment 4 of the present invention.

### DETAILED DESCRIPTION OF THE EMBODIMENTS

For better understanding of the objective, technical solution and merits of the present invention, the following describes the present invention in detail with reference to the accompanying drawings.

### Embodiment 1

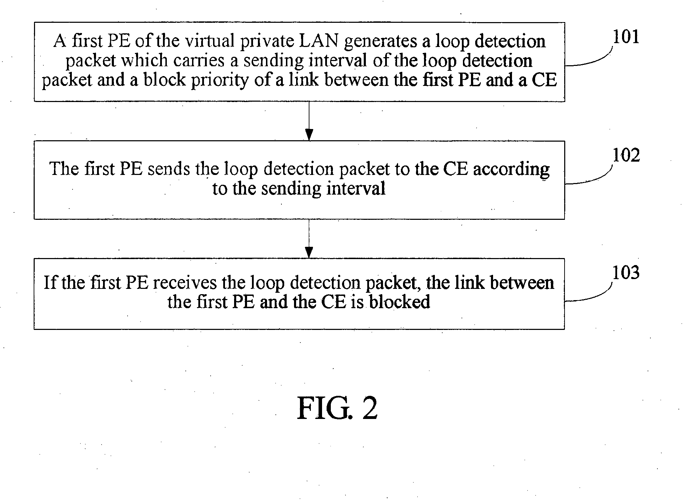

The present invention provides a loop detection method in a virtual private LAN, so as to solve a problem that the loop detection technique in a VPLS network depends on the deployment on the customer side network, and effectively prevent a loop from occurring in the provider network. Referring to FIG. 2, the method includes the following steps.

In step 101: A first PE of the virtual private LAN generates a loop detection packet which carries a sending interval of the loop detection packet and a block priority of a link between the first PE and a CE.

In step 102: The first PE sends the loop detection packet to the CE according to the sending interval.

In step 103: If the first PE receives the loop detection packet, the link between the first PE and the CE is blocked.

The method further includes the following steps.

If the first PE receives the loop detection packet sent by the second PE, the first PE performs a blocking process according to a block priority of a link between a second PE and the CE carried in a received loop detection packet sent by the second PE and the block priority of the link between the first PE and the CE.

Further, the performing the blocking process by the first PE according to the block priority of the link between the second PE and the CE carried in the received loop detection packet sent by the second PE and the block priority of the link between the first PE and the CE includes the following steps.

The first PE obtains the block priority of the link between the second PE and the CE, where the block priority is carried in the received loop detection packet sent by the second PE, and the block priority of the link between the first PE and the CE.

The first PE determines whether the block priority of the link between the second PE and the CE is lower than the block priority of the link between the first PE and the CE.

If the block priority of the link between the second PE and the CE is lower than the block priority of the link between the first PE and the CE, the first PE blocks the link between the second PE and the CE.

If the block priority of the link between the first PE and the CE is lower than the block priority of the link between the second PE and the CE, the first PE blocks the link between the first PE and the CE.

If the block priority of the link between the second PE and the CE is equal to the block priority of the link between the first PE and the CE, the first PE performs the blocking process according to a processing manner preset in the loop detection packet sent by the second PE.

The method further includes the following steps.

If the link between the first PE and the CE is blocked permanently, the first PE sets a block time in the loop detection packet, and sends the loop detection packet with the set block time to the CE.

The first PE sums the block time and a sending period, so as to obtain a block releasing time.

The block releasing time is the sending period plus the block time.

The first PE releases the block of the link between the first PE and the CE if the loop detection packet is not received when the block releasing time ends after the loop detection packet with the set block time is sent.

Further, when the loop detection packet is not completely sent to a link range set in the loop detection packet within one sending period, the following steps are performed.

The first PE computes the number of the sending periods required for sending the loop detection packet to the link range set in the loop detection packet completely, and sets the number of the sending periods in the loop detection packet with the set block time.

The first PE obtains a new block releasing time as follows:
Block releasing time = (Sending period × Number of the sending periods) + Block time

The first PE releases the block of the link between the first PE and the CE if the loop detection packet is not received when the new block releasing time ends after the loop detection packet with the set block time and the number of the sending periods is sent.

Specifically, an interface of the link between the PE and the CE is a virtual local area network (VLan) sub interface, a IEEE 802.1Q (Dotlq) termination sub interface, a 802.1Q in 802.1Q(QinQ) termination sub interface, a common Layer 2 main interface having a Link_Type of Trunk or Hybrid, or an interface having a Link_Type of Dotlq Tunnel.

In the method according to the embodiment of the present invention, the first PE sends the loop detection packet to the CE through the link between the first PE and the CE. If the second PE or the first PE receives the loop detection packet, it is determined that the loop exists between the CE and the PE. Thus, one of the links may be blocked, so as to isolate a broadcast storm of the customer at the customer side network, thereby solving the problem that the existing loop detection technique in the VPLS network depends on the deployment on the customer side network.

### Embodiment 2

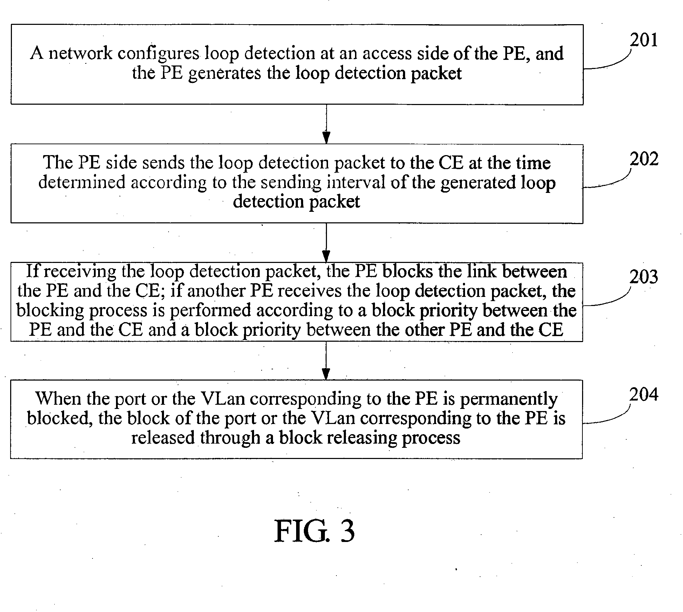

The present invention provides a loop detection method in a virtual private LAN, so as to solve the problem that the loop detection technique in a VPLS network depends on the deployment on the customer side network, and effectively prevent a loop from occurring in the provider network. One PE sends a loop detection packet for detecting the customer side network through a link between a CE and the PE; if another PE can receive the loop detection packet, it indicates that the customer side network accessing the VPLS is communicated, and the loop exists between the CE and the PE. When detecting that the loop exists, the PE automatically blocks one of the links; if the PE receives the loop detection packet, it indicates that the loop is generated in the customer side network, and at this time, the link between the PE and the CE is blocked, so as to isolate a broadcast storm of the customer on the customer side network. Referring to FIG. 3, a specific implementation procedure is as follows.

In step 201: A network configures loop detection at an access side of the PE, and the PE generates the loop detection packet. The content of the packet is as follows:

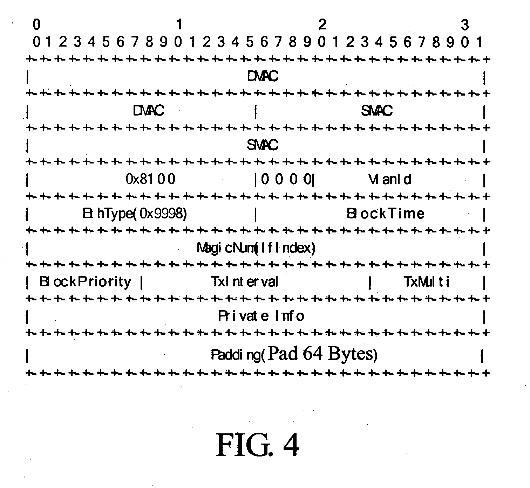

FIG. 4 shows the format of the loop detection packet generated by the network.

In FIG. 4, a destination media access control (DMAC) is a broadcast media access control (MAC) address, and the CE may perform broadcast forwarding in the network.

A source media access control (SMAC) is a MAC address of a management network port of the device, which can uniquely identify one device in the network, and is configured to uniquely identify the PE sending the loop detection packet.

0x8100 is an Ethernet 802.1q identifier. The loop detection packet is encapsulated according to an encapsulation type on an access circuit (AC). If the encapsulation type on the AC is Ethernet encapsulation, the loop detection packet selects the Ethernet encapsulation. If the encapsulation type on the AC is VLAN encapsulation, the Ethernet packet is encapsulated by adopting the VLAN. If the encapsulation type on the AC is QINQ, two layers of VLAN Tags are encapsulated.

EthType indicates a reserved type of 0x9998 selected for identifying the loop detection packet.

BlockTime indicates a set block time in a unit of second. After the block time is set, the port is blocked for the time. If the block time is not set, the port is permanently blocked until an event of releasing the block occurs.

MagicNum indicates a magic number used internally for block determination. In actual use, an interface index in the device may be used, or the magic number may be used for other extensions.

BlockPriority indicates a set block priority. After receiving the block priority, a receiving end determines whether the priority is lower than a locally set priority, and the link with the lower priority is preferentially blocked.

TxInterval indicates a set sending interval in a unit of millisecond. In an instance, a sending end traverses and detects the VLan at an interval of a period, and sends the encapsulated loop detection packet for detecting the VLan. The receiving end is configured to determine whether to perform or release the block.

TxMulti may be filled if many VLans are to be detected, and the loop detection packet cannot be completely sent in one sending period. The field indicates a multiple of the sending interval, and is used for the receiving end to determine whether to perform or release the block.

Private Info indicates some private information, and may be extended to password authentication and other information.

Padding is used to pad 64 bytes.

In step 202: The PE sends the loop detection packet to the CE at the time determined according to the sending interval of the generated loop detection packet.

The PE sends the loop detection packet to the CE at the time determined according to the sending interval set in the loop detection packet in Step 201, that is, the TxInterval field in FIG. 4, in which each sending interval is one sending period of the loop detection packet. For example, if TxInterval is one second, the PE sends the loop detection packet for once per second.

For different interfaces, the network configures different loop detection packets. Correspondingly, the PE sends the different loop detection packets to the CE according to the different interfaces, and detects the different interface loops. According to the different detected interfaces, the sent loop detection packets are specifically divided into the following types.
(1) A common VLan sub interface is detected, and a loop detection packet carrying the VLan set by the VLan sub interface configuration is sent. Usually, only one VLan sub interface exists, and in the configuration of the VLanId field in the loop detection packet in FIG. 4, a VLanId corresponding to the VLan sub interface is set in the VLanId field. For example, if the VLanId corresponding to the VLan sub interface is 123, 123 is set in the VLanId field of the loop detection packet, and the loop detection packet with the VLan sub interface of 123 is sent.
(2) Dotlq termination sub interfaces are detected, and a loop detection packet of the VLans set by the Dotlq termination sub interfaces is traversed and sent. Usually, a plurality of Dotlq termination sub interfaces exists, and includes one or more VLanId segments. In the configuration of the VLanId field in FIG. 4, one or more VLanId segments corresponding to all the Dotlq termination sub interfaces are set in the VLanId field. For example, if one VLanId segment corresponding to the Dotlq termination sub interfaces is 123-128, the VLanIds 123-128 are set in the VLanId field of the loop detection packet, so as to send the loop detection packet in which the Dotlq termination sub interfaces are 123-128. Further, if two VLanId segments corresponding to the Dotlq termination sub interfaces are 123-128 and 214-232, the VLanIds 123-128 and 214-232 are set in the VLanId field of the loop detection packet, so as to send the loop detection packet in which the Dotlq termination sub interfaces are 123-128 and 214-232.
(3) A QinQ termination sub interface is detected, and a loop detection packet of the VLans set by the QinQ termination sub interfaces is traversed and sent. Usually, the QinQ termination sub interfaces have two layers, and a VLanId of each layer is set in the VLanId field in FIG. 4. For example, if the VLanId of an outer layer of the QinQ termination sub interface is 2, and the VLanIds of an inner layer are 123-132, the VLanId 2 of the outer layer and the VLanIds 123-132 of the inner layer are set in the VLanId field of the loop detection packet, so as to send the loop detection packet of the QinQ termination sub interface.
(4) A common Layer 2 main interface having a Link_Type of Trunk or Hybrid is detected, and a loop detection packet of the VLan set by the main interface is traversed and sent. Usually, the common Layer 2 main interface having the Link_Type of Trunk or Hybrid has a VLan encapsulation, and a VLanId corresponding to the interface is set in a VLanId field of the loop detection packet. Further, the common Layer 2 main interface having the Link_Type of Trunk or Hybrid may have or may not have the VLan encapsulation, and the VLanId corresponding to the interface having the VLan encapsulation is set in the VLanId field of the loop detection packet.
(5) An interface having a Link_Type of Dotlq Tunnel is detected, and a VLan range to be detected may be set. If the VLan range is not set, all the VLans are traversed, and the loop detection packet is encapsulated and sent.

No matter on a control layer or a forwarding layer, if all VLanQ segments or VLanQ pairs cannot be sent in one sending period due to performance reasons, for each loop detection instance, only a limited number of packets, for example, 256 packets, are sent in each sending period, in this case, counting is performed when the VLanQ segments are traversed and sent in each instance, and the process waits until timeout of a timer after the number reaches 256, and at this time, values of the outer VLanQ and the inner VLanQ are recorded. During the next sending process, the traverse is started from the values of the outer VLanQ and the inner VLanQ saved in the instance. If all the VLanQs are traversed and the count is lower than or equal to 256 in one sending period, the two VLanQ values are cleared to 0, and the traverse is performed from the beginning during the next time.

In step 203: If receiving the loop detection packet, the PE blocks the link between the PE and the CE. If another PE receives the loop detection packet, the blocking process is performed according to a block priority between the PE and the CE and a block priority between another PE and the CE. The particular procedure is described as follows:
The PE sends the loop detection packet to the CE at a loop detection enabled port, as the packet is a broadcast packet, the packet is broadcast and forwarded in the customer side network. If the customer side network is communicated or forms the loop, the PE or the other PE may receive the loop detection packet, does not forward the loop detection packet after receiving the packet, and blocks the port according to the loop detection packet. In order to prevent frequent blocking of the link and releasing of the block, usually under a situation that the blocking process is not performed, it is set that the corresponding interface or VLan is blocked only when more than three loop detection packets are accumulatively received in each instance. According to the actual situation, it is possible to flexibly set the number of the received loop detection packets for performing the blocking process, which is not limited in the embodiment of the present invention.

The loop detection packet carries a block priority field, and the block priority field is the block priority of the loop detection packet, that is, the BlockPriority field in FIG. 4. When receiving the loop detection packet, the PE firstly determines whether the packet is sent by the PE according to the SMAC of the loop detection packet (the SMAC may uniquely identify the PE sending the loop detection packet).

If the loop detection packet is sent by the PE, the port or the VLan is blocked.

If the loop detection packet is not sent by the PE, that is, the PE receives the loop detection packet sent by another PE, the PE needs to determine whether the local priority (that is, the block priority between the PE and the CE) is lower than the block priority of the loop detection packet (that is, the block priority of the link between the PE sending the loop detection packet and the CE is carried in the loop detection packet, that is, the BlockPriority field in FIG. 4), the port or the VLan with the lower priority is blocked. If the block priority of the loop detection packet is equal to the local priority, the PE needs to determine according to the MagicNum of the loop detection packet. The MagicNum in the loop detection packet is configured to determine whether to block the local port or VLan or block the port or the VLan corresponding to the loop detection packet when the lock priority of the loop detection packet is equal to the local priority. If it is set in the MagicNum that the local port or VLan is blocked, when the lock priority of the loop detection packet is equal to the local priority, the local port or VLan is blocked; if it is set in the MagicNum that the port or the VLan corresponding to the loop detection packet is blocked, when the lock priority of the loop detection packet is equal to the local priority, the port or the VLan corresponding to the loop detection packet is blocked.

If the PE already performs the blocking process, but the PE finds that the priority of the received loop detection packet is lower than the local priority of the PE, it indicates that the PE sending the loop detection packet may modify the priority or eliminate the priority configuration, and at this time, no matter the block time is set or the block is permanent, the block of the PE needs to be immediately released, so as to facilitate the blocking process of the PE sending the loop detection packet.

When the detected interface is Trunk, both the sub interface and the main interface may be Trunk, the situation of cross interface board may exist, so one main processing board is selected, and the loop detection packet is only sent from the main processing board. A receiving list is delivered to other member boards, in which a board number of the main processing board is saved. When another interface board receives the loop detection packet, if the board is not the main processing board, the board transparently transmits the loop detection packet to the main processing board for processing.

In this step, no matter the port or the VLan corresponding to the PE is blocked or port or the VLan corresponding to another PE is blocked, the blocking process may be performed according to the block time set in the BlockTime of the loop detection packet. After the block time is set, the port is blocked for the time, and if the block time is not set, the port is permanently blocked until an event of releasing the block occurs.

In step 204: When the port or the VLan corresponding to the PE is permanently blocked, the block of the port or the VLan corresponding to the PE is released through a block releasing process. The details are described in the following.

In the case of a permanent block, the block is not released permanently unless the block configuration is eliminated, or the block time is set.

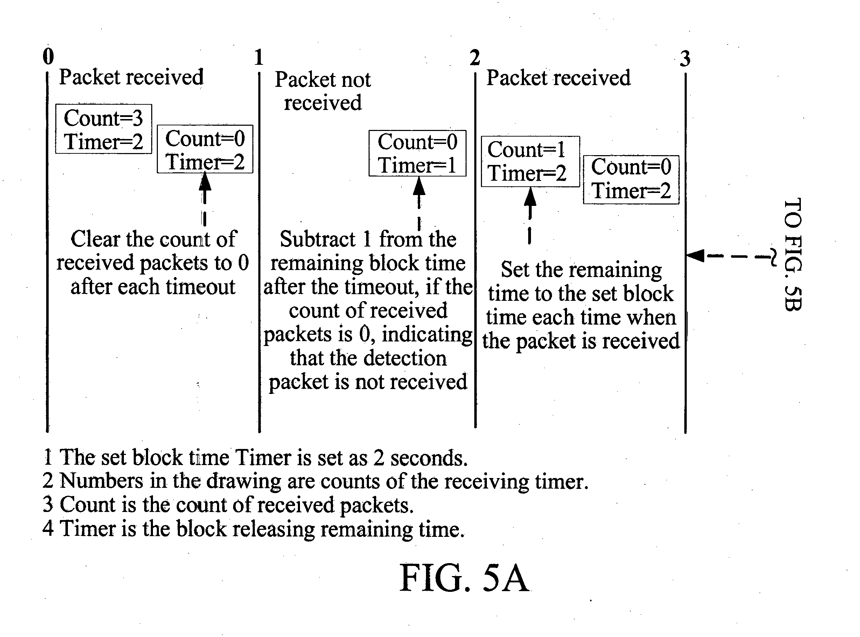

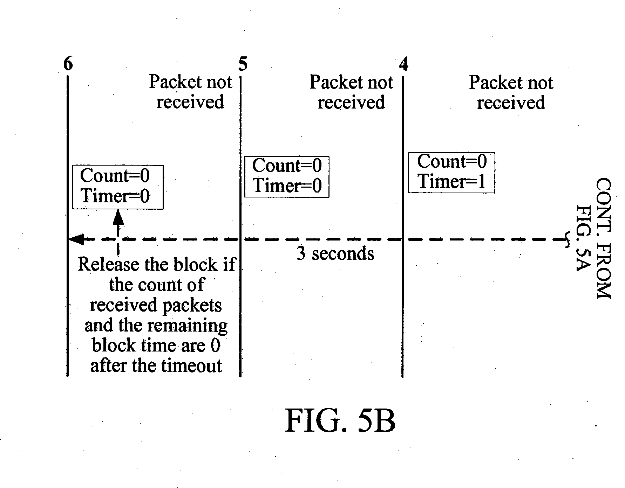

When the block time is set, if the blocking process is already performed, the block releasing condition is to release the block after the block time plus one period after the detection packet is not received (when the detection packet is received, TxInterval in the packet is the period). Referring to FIG. 5, the set block time is 2 seconds, the TxInterval in the loop detection packet is 1 second, and key fields include a count of received packets Count and a block releasing remaining time Timer; if the loop is already removed, the block may be released at approximately 2 + 1 = 3 seconds, that is, the block releasing time = TxInterval + BlockTime.

A special block releasing process is given in the following.

If the VLan range set on each sub interface or interface corresponding to the loop detection packet is relatively large, due to performance limits of the control layer or the forwarding layer, the packets of all the VLans may not be completely sent in the set sending period, that is, a period of the sending timer is inconsistent with a period of the count of received packets. That is, if the TxInterval is set as 1 second, one detection packet is unnecessarily sent per second as expected. If the VLan 2000 generates the loop, and the VLan range set on the interface is too large, due to the performance limits of the control layer or the forwarding layer, only 256 VLan detection packets can be sent per second. Therefore, a VLan 2000 detection packet is sent per 8 seconds, and at this time, the PE cannot receive the detection packet for a long time. If the set block time is smaller than 7 seconds, a sum of the block time and the sending period is smaller than 8 seconds, and the block may be released by mistake.

The blocking process is always performed when the detection packet is received, but the period of the packet receiving time is always determined by the VLan range set on the sending end, and cannot be known by the receiving end. Therefore, in the embodiment of the present invention, a multiple of the sending interval, that is, the TxMulti field in the packet, is carried in the loop detection packet. The sending end determines the number of the periods to send all the VLans according to its capability, and sends the integral value by encapsulating the integral value in the TxMulti field in the loop detection packet. For example, if the sending end determines that all the VLans are sent in three periods, according to its capability, the sending end sets the TxMulti field in the loop detection packet to 3. Under a normal situation, if the VLans can be completely sent in one period, the value is encapsulated as 1.

When the receiving end receives the loop detection packet, if the TxMulti field is 1, it indicates that all the VLans can be completely sent in one TxInterval period, and the process is performed according to the above process; if the TxMulti is greater than 1, the timing of the block timer is started after a timer of TxMulti multiplied by TxInterval times out, and the block is not released until then, that is, the block releasing time = (TxInterval × TxMulti) + BlockTime.

The loop detection method according to the embodiment of the present invention may be normally used with the STP technology. When the loop detection and the STP are used together, three situations may occur, which are respectively analyzed in the following in the embodiment of the present invention.
(1) The STP protocol firstly becomes effective to block the loop of the link.
   The STP blocks the link, and the loop does not exist, such that the PE does not receive the loop detection packet, the elimination of the loop completely depends on the STP protocol, and the loop detection does not function.
(2) The loop detection firstly becomes effective to block the loop of the link.
   The loop detection firstly becomes effective, such that the STP protocol packet cannot be transparently transmitted, and the STP does not function, but the objective of eliminating the loop through the STP is achieved without affecting the use of the customer side network.
(3) The two protocols become effective at the same time to block different links.

The links are blocked, such that the customer side network is interrupted for a period of time. The loop detection does not receive the detection packet in the block releasing time, so as to automatically release the block of the blocked links, in which the time is approximately equal to a convergence time when the link failure occurs. If the loop detection configures the permanent block, as the STP protocol packet cannot be transparently transmitted, the STP also releases the block in the convergence time. If one link is blocked at the same time, the loop detection releases the block of the link after the block releasing time, but at this time, the STP blocks the link, such that the loop is not generated.

Through the analysis on the above three situations, it may be found that when the STP and the loop detection are set at the same time, the customer side network is basically not affected; further, by adjusting the priority of the PE, the link blocked by the loop detection and the STP is the same link.

In the method according to the embodiment of the present invention, one PE sends the loop detection packet for the customer side network through the link between the PE and the CE. If another PE or the PE receives the loop detection packet, it is determined that the loop exists between the CE and the PE. Thus, one of the links may be blocked, so as to isolate a broadcast storm of the customer at the customer side network, thereby solving the problem that the existing loop detection technique in the VPLS network depends on the deployment on the customer side network.

### Embodiment 3

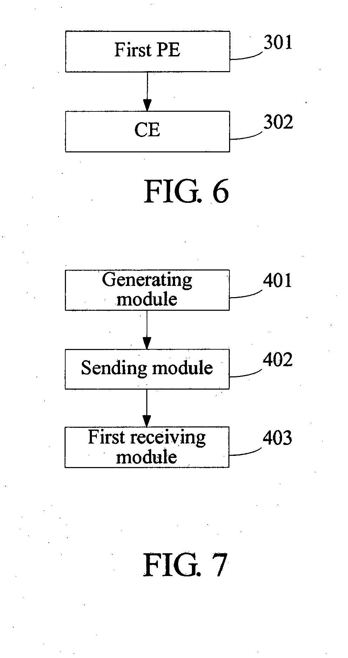

The present invention provides a loop detection system in a virtual private LAN. Referring to FIG. 6, the system includes a first PE 301 and a CE 302.

The first PE 301 is configured to generate a loop detection packet which carries a sending interval of the loop detection packet and a block priority of a link between the first PE 301 and the CE 302, send the loop detection packet to the CE 302 according to the sending interval, and block the link between the first PE 301 and the CE 302 if the first PE 301 receives the loop detection packet.

The CE 302 is configured to receive the loop detection packet sent by the first PE 301, and send the loop detection packet to the first PE 301 if a loop exists between the CE and the first PE 301.

The first PE 301 is further configured to perform a blocking process according to a block priority of a link between a second PE and the CE 302 carried in a received loop detection packet sent by the second PE and the block priority of the link between the first PE 301 and the CE 302 if the first PE 301 receives the loop detection packet sent by the second PE.

Further, the first PE 301 is configured to obtain the block priority of the link between the second PE and the CE 302 carried in the received loop detection packet sent by the second PE and the block priority of the link between the first PE 301 and the CE 302.

The first PE 301 is configured to determine whether the block priority of the link between the second PE and the CE 302 is lower than the block priority of the link between the first PE 301 and the CE 302.

The first PE 301 is configured to block the link between the second PE and the CE 302 if the block priority of the link between the second PE and the CE 302 is lower than the block priority of the link between the first PE 301 and the CE 302.

The first PE 301 is configured to block the link between the first PE 301 and the CE 302 if the block priority of the link between the first PE 301 and the CE 302 is lower than the block priority of the link between the second PE and the CE 302.

The first PE 301 is configured to perform the blocking process according to a processing manner preset in the loop detection packet sent by the second PE if the block priority of the link between the second PE and the CE 302 is equal to the block priority of the link between the first PE 301 and the CE 302.

The first PE 301 is further configured to configure a block time in the loop detection packet and send the loop detection packet with the set block time to the CE 302 if the link between the first PE 301 and the CE 302 is permanently blocked, sum the block time and a sending period to obtain a block releasing time, and release the block of the link between the first PE 301 and the CE 302 if the loop detection packet is received when the block releasing time ends after the loop detection packet with the set block time is sent.

In the system according to the embodiment of the present invention, the first PE sends the loop detection packet for the CE network through the link between the first PE and the CE. If the second PE or the first PE receives the loop detection packet, it is determined that the loop exists between the CE and the PE, such that one of the links may be blocked, so as to isolate a broadcast storm of the customer at the customer side network, thereby solving the problem that the existing loop detection technique in the VPLS network depends on the deployment on the customer side network.

### Embodiment 4

The present invention provides a PE device. Referring to FIG. 7, the device includes a generating module 401, a sending module 402, and a first receiving module 403.

The generating module 401 is configured to generate a loop detection packet which carries a sending interval of the loop detection packet and a block priority of a link between the PE and a CE.

The sending module 402 is configured to send the loop detection packet to the CE according to the sending interval.

The first receiving module 403 is configured to block the link between the PE and the CE if receiving the loop detection packet.

The device further includes a second receiving module.

The second receiving module is configured to perform a blocking process according to a block priority of a link between a second PE and the CE carried in a received loop detection packet sent by the second PE and the block priority of the link between the PE and the CE if receiving the loop detection packet sent by the second PE.

Further, the second receiving module includes an obtaining unit, a determining unit, a first blocking unit, a second blocking unit, and a third blocking unit.

The obtaining unit is configured to obtain the block priority of the link between the second PE and the CE carried in the received loop detection packet sent by the second PE and the block priority of the link between the PE and the CE.

The determining unit is configured to determine whether the block priority of the link between the second PE and the CE is lower than the block priority of the link between the PE and the CE.

The first blocking unit is configured to block the link between the second PE and the CE if the block priority of the link between the second PE and the CE is lower than the block priority of the link between the PE and the CE.

The second blocking unit is configured to block the link between the PE and the CE if the block priority of the link between the PE and the CE is lower than the block priority of the link between the second PE and the CE.

The third blocking unit is configured to perform the blocking process according to a processing manner preset in the loop detection packet sent by the second PE if the block priority of the link between the second PE and the CE is equal to the block priority of the link between the PE and the CE.

The device further includes a block releasing module.

The block releasing module is configured to configure a block time in the loop detection packet and send the loop detection packet with the set block time to the CE if the link between the PE and the CE is permanently blocked, sum the block time and a sending period to obtain a block releasing time, and release the block of the link between the PE and the CE if the loop detection packet is not received when the block releasing time ends after the loop detection packet with the set block time is sent.

In the device according to the embodiment of the present invention, the PE sends the loop detection packet for the CE network through the link between the PE and the CE. If the second PE or the PE receives the loop detection packet, it is determined that the loop exists between the CE and the PE. Thus, one of the links may be blocked, so as to isolate a broadcast storm of the customer at the customer side network, thereby solving the problem that the existing loop detection technique in the VPLS network depends on the deployment on the customer side network.

The embodiments of the present invention may be implemented by software, and corresponding software programs may be stored in readable storage media, such as a hard disk or cache of a router or an optical disk.

The present invention has been described by some preferred embodiments, but is not limited to those embodiments. Those skilled in the art may make various modifications and variations to the invention without departing from the scope of the invention. Therefore, the protection scope of the present invention is subject to the appended claims.

## Claims

1. A loop detection method in a virtual private local area network, LAN, **characterized in** comprising:
Generating (101), by a first provider edge, PE, of the virtual private LAN, a loop detection packet, wherein the loop detection packet carries a sending interval of the loop detection packet and a block priority of a link between the first PE and a customer edge, CE.
Sending (102), by the first PE, the loop detection packet to the CE according to the sending interval;
Blocking (103) the link between the first PE and the CE if the first PE receives the loop detection packet sent by the first PE; and
performing, by the first PE, a blocking process according to a block priority of a link between a second PE and the CE carried in a received loop detection packet sent by the second PE, and the block priority of the link between the first PE and the CE, if the first PE receives the loop detection packet sent by the second PE, wherein said blocking process according to the block priority is performed by determining whether the block priority of the link between the first PE and the CE is lower than the block priority of the link between the second PE and the CE; and the link with the lower priority is blocked.

2. The method according to claim 1, wherein the performing, by the first PE, the blocking process, according to the block priority of the link between the second PE and the CE carried in the received loop detection packet sent by the second PE, and the block priority of the link between the first PE and the CE comprises:
obtaining, by the first PE, the block priority of the link between the second PE and the CE carried in the received loop detection packet sent by the second PE and the block priority of the link between the first PE and the CE;
determining, by the first PE, whether the block priority of the link between the second PE and the CE is lower than the block priority of the link between the first PE and the CE;
blocking, by the first PE, the link between the second PE and the CE, if the block priority of the link between the second PE and the CE is lower than the block priority of the link between the first PE and the CE;
blocking, by the first PE, the link between the first PE and the CE, if the block priority of the link between the first PE and the CE is lower than the block priority of the link between the second PE and the CE; and
performing, by the first PE, the blocking process, according to a processing manner preset in the loop detection packet sent by the second PE, if the block priority of the link between the second PE and the CE is equal to the block priority of the link between the first PE and the CE.

3. The method according to claim 1, further comprising:
setting, by the first PE, a block time in the loop detection packet, and sending the loop detection packet with the set block time to the CE, if the link between the first PE and the CE is blocked permanently;
summing, by the first PE, the block time and a sending period, so as to obtain a block releasing time; and
releasing, by the first PE, the block of the link between the first PE and the CE, if the loop detection packet is not received when the block releasing time ends after the loop detection packet with the set block time is sent.

4. The method according to claim 3, wherein when the loop detection packet is not completely sent to a link range set in the loop detection packet within one sending period,
the first PE computes the number of the sending periods required for completely sending the loop detection packet to the link range set in the loop detection packet, and sets the number of the sending periods in the loop detection packet with the set block time;
the first PE sums a time obtained by multiplying the number of the sending periods by the sending period and the block time, so as to obtain a new block releasing time; and
the first PE releases the block of the link between the first PE and the CE if the loop detection packet is not received when the new block releasing time ends after the loop detection packet with the set block time and the number of the sending periods is sent.

5. A loop detection system in a virtual private local area network, LAN, **characterized in** comprising a first provider edge, PE (301), and a customer edge, CE (302), wherein
the first PE is configured to generate a loop detection packet, wherein the loop detection packet carries a sending interval of the loop detection packet and a block priority of a link between the first PE and the CE, send the loop detection packet to the CE according to the sending interval, and block the link between the first PE and the CE if the first PE receives the loop detection packet, sent from the first PE; and
the CE is configured to receive the loop detection packet sent by the first PE, and send the loop detection packet to the first PE through a loop if the loop exists between the CE and the first PE;
wherein the first PE is further configured to perform a blocking process according to a block priority of a link between a second PE and the CE carried in a received loop detection packet sent by the second PE and the block priority of the link between the first PE and the CE, if the first PE receives the loop detection packet sent by the second PE wherein said blocking process according to the block priority is performed by determining whether the block priority of the link between the first PE and the CE is lower than the block priority of the link between the second PE and the CE; and the link with the lower priority is blocked.

6. The system according to claim 5, wherein the first PE is further configured to set a block time in the loop detection packet and send the loop detection packet with the set block time to the CE if the link between the first PE and the CE is blocked permanently, sum the block time and a sending period to obtain a block releasing time, and release the block of the link between the first PE and the CE if the loop detection packet is not received when the block releasing time ends after the loop detection packet with the set block time is sent.

7. A provider edge, PE, device, adapted for a virtual private area network **characterized in** comprising:
a generating module (401), configured to generate a loop detection packet, wherein the loop detection packet carries a sending interval of the loop detection packet and a block priority of a link between the PE and a customer edge, CE,;
a sending module (402), configured to send the loop detection packet to the CE according to the sending interval;
a first receiving module (403), configured to block the link between the PE and the CE if receiving the loop detection packet sent by said PE; and
a second receiving module, configured to perform a blocking process according to a block priority of a link between a second PE and the CE carried in a received loop detection packet sent by the second PE and the block priority of the link between the PE and the CE if receiving the loop detection packet sent by the second PE wherein said blocking process according to the block priority is performed by determining whether the block priority of the link between the first PE and the CE is lower than the block priority of the link between the second PE and the CE; and the link with the lower priority is blocked.

8. The device according to claim 7, wherein the second receiving module comprises:
an obtaining unit, configured to obtain the block priority of the link between the second PE and the CE carried in the received loop detection packet sent by the second PE and the block priority of the link between the PE and the CE;
a determining unit, configured to determine whether the block priority of the link between the second PE and the CE is lower than the block priority of the link between the PE and the CE;
a first blocking unit, configured to block the link between the second PE and the CE if the block priority of the link between the second PE and the CE is lower than the block priority of the link between the PE and the CE;
a second blocking unit, configured to block the link between the PE and the CE if the block priority of the link between the PE and the CE is lower than the block priority of the link between the second PE and the CE; and
a third blocking unit, configured to perform the blocking process according to a processing manner preset in the loop detection packet sent by the second PE if the block priority of the link between the second PE and the CE is equal to the block priority of the link between the PE and the CE.

9. The device according to claim 7, further comprising:
a block releasing module, configured to set a block time in the loop detection packet and send the loop detection packet with the set block time to the CE if the link between the PE and the CE is blocked permanently, sum the block time and a sending period to obtain a block releasing time, and release the block of the link between the PE and the CE if the loop detection packet is not received when the block releasing time ends after the loop detection packet with the set block time is sent.

10. A computer program product, comprising computer program code that will cause a computer unit to perform all the steps of claims 1 to 4 when being executed by the computer unit.

## Patentansprüche

1. Schleifendetektionsverfahren in einem virtuellen privaten lokalen Netzwerk (VP-LAN), **dadurch gekennzeichnet, dass** es Folgendes umfasst:
Erzeugen (101) eines Schleifendetektionspakets durch einen ersten "Provider Edge" (PE) des VP-LAN, wobei das Schleifendetektionspaket ein Sendeintervall des Schleifendetektionspakets und eine Blockpriorität einer Verbindung zwischen dem ersten PE und einem "Customer Edge" (CE) trägt;
Senden (102) des Schleifendetektionspakets an den CE durch den ersten PE entsprechend dem Sendeintervall;
Blockieren (103) der Verbindung zwischen dem ersten PE und dem CE, wenn der erste PE das vom ersten PE gesendete Schleifendetektionspaket empfängt, und
Ausführen, durch den ersten PE, eines Blockierprozesses entsprechend einer Blockpriorität einer Verbindung zwischen einem zweiten PE und dem CE, die in einem vom zweiten PE gesendeten Schleifendetektionspaket getragen wird, und entsprechend der Blockpriorität der Verbindung zwischen dem ersten PE und dem CE, wenn der erste PE das vom zweiten PE gesendete Schleifendetektionspaket empfängt,
wobei besagter Blockierprozess entsprechend der Blockpriorität ausgeführt wird, indem bestimmt wird, ob die Blockpriorität der Verbindung zwischen dem ersten PE und dem CE geringer ist als die Blockpriorität der Verbindung zwischen dem zweiten PE und dem CE; und die Verbindung mit der geringeren Priorität blockiert wird.

2. Verfahren nach Anspruch 1, wobei das Ausführen des Blockierprozesses durch den ersten PE entsprechend der Blockpriorität der Verbindung zwischen dem zweiten PE und dem CE, die in dem empfangenen Schleifendetektionspaket getragen wird, das vom zweiten PE gesendet wird, und entsprechend der Blockpriorität der Verbindung zwischen dem ersten PE und dem CE Folgendes umfasst:
Gewinnen, durch den ersten PE, der Blockpriorität der Verbindung zwischen dem zweiten PE und dem CE, die im empfangenen Schleifendetektionspaket getragen wird, das vom zweiten PE gesendet wird, und der Blockpriorität der Verbindung zwischen dem ersten PE und dem CE;
Bestimmen, durch den ersten PE, ob die Blockpriorität der Verbindung zwischen dem zweiten PE und dem CE geringer ist als die Blockpriorität der Verbindung zwischen dem ersten PE und dem CE;
Blockieren der Verbindung zwischen dem zweiten PE und dem CE durch den ersten PE, wenn die Blockpriorität der Verbindung zwischen dem zweiten PE und dem CE geringer ist als die Blockpriorität der Verbindung zwischen dem ersten PE und dem CE;
Blockieren der Verbindung zwischen dem ersten PE und dem CE durch den ersten PE, wenn die Blockpriorität der Verbindung zwischen dem ersten PE und dem CE geringer ist als die Blockpriorität der Verbindung zwischen dem zweiten PE und dem CE; und Ausführen des Blockierprozesses durch den ersten PE entsprechend einer Verarbeitungsweise, die im Schleifendetektionspaket voreingestellt ist, das vom zweiten PE gesendet wird, wenn die Blockpriorität der Verbindung zwischen dem zweiten PE und dem CE gleich der Blockpriorität der Verbindung zwischen dem ersten PE und dem CE ist.

3. Verfahren nach Anspruch 1, das weiterhin Folgendes umfasst:
Einstellen einer Blockzeit im Schleifendetektionspaket durch den ersten PE und Senden des Schleifendetektionspakets mit der eingestellten Blockzeit an den CE, wenn die Verbindung zwischen dem ersten PE und dem CE ständig blockiert ist;
Summieren der Blockzeit und einer Sendeperiode durch den ersten PE, um eine Blockfreigabezeit zu gewinnen; und
Freigeben des Blocks der Verbindung zwischen dem ersten PE und dem CE durch den ersten PE, wenn das Schleifendetektionspaket nicht empfangen wird, wenn die Blockfreigabezeit endet, nachdem das Schleifendetektionspacket mit der eingestellten Blockzeit gesendet worden ist.

4. Verfahren nach Anspruch 3, wobei, wenn das Schleifendetektionspaket nicht vollständig an einen Verbindungsbereich gesendet wird, der im Schleifendetektionspaket innerhalb einer Sendeperiode eingestellt ist,
der erste PE die Anzahl der Sendeperioden berechnet, die erforderlich ist, um das Schleifendetektionspaket vollständig an den Verbindungsbereich zu senden, der im Schleifendetektionspaket eingestellt ist, und die Anzahl der Sendeperioden im Schleifendetektionspaket mit der eingestellten Blockzeit einstellt;
der erste PE eine Zeit summiert, die durch Multiplizieren der Anzahl der Sendeperioden mit der Sendeperiode und der Blockzeit gewonnen wird, um eine neue Blockfreigabezeit zu gewinnen; und
der erste PE die Blockierung der Verbindung zwischen dem ersten PE und dem CE freigibt, wenn das Schleifendetektionspaket nicht empfangen wird, wenn die neue Blockfreigabezeit endet, nachdem das Schleifendetektionspaket mit der eingestellten Blockzeit und der Anzahl der Sendeperioden gesendet worden ist.

5. Schleifendetektionssystem in einem virtuellen privaten lokalen Netzwerk (VP-LAN), **dadurch gekennzeichnet, dass** es einen ersten "Provider Edge" (PE) (301) und einen "Customer Edge" (CE) (302) umfasst, wobei
der erste PE so konfiguriert ist, dass er ein Schleifendetektionspaket erzeugt, wobei das Schleifendetektionspaket ein Sendeintervall des Schleifendetektionspakets und eine Blockpriorität einer Verbindung zwischen dem ersten PE und dem CE trägt, das Schleifendetektionspaket entsprechend dem Sendeintervall an den CE sendet und die Verbindung zwischen dem ersten PE und dem CE blockiert, wenn der erste PE das vom ersten PE gesendete Schleifendetektionspaket empfängt; und
der CE so konfiguriert ist, dass er das vom ersten PE gesendete Schleifendetektionspaket empfängt und das Schleifendetektionspaket an den ersten PE über eine Schleife sendet, wenn die Schleife zwischen dem CE und dem ersten PE existiert;
wobei der erste PE weiterhin so konfiguriert ist, dass er einen Blockierprozess entsprechend einer Blockpriorität einer Verbindung zwischen einem zweiten PE und dem CE, die in einem Schleifendetektionspaket getragen wird, das vom zweiten PE gesendet wird, und entsprechend der Blockpriorität der Verbindung zwischen dem ersten PE und dem CE ausführt, wenn der erste PE das vom zweiten PE gesendete Schleifendetektionspaket empfängt,
wobei besagter Blockierprozess entsprechend der Blockpriorität ausgeführt wird, indem bestimmt wird, ob die Blockpriorität der Verbindung zwischen dem ersten PE und dem CE geringer ist als die Blockpriorität der Verbindung zwischen dem zweiten PE und dem CE; und die Verbindung mit der geringeren Priorität blockiert wird.

6. System nach Anspruch 5, wobei der erste PE weiterhin so konfiguriert ist, dass er eine Blockzeit im Schleifendetektionspaket einstellt und das Schleifendetektionspaket mit der eingestellten Blockzeit an den CE sendet, wenn die Verbindung zwischen dem ersten PE und dem CE ständig blockiert ist, die Blockzeit und eine Sendeperiode summiert, um eine Blockfreigabezeit zu gewinnen, und die Blockierung der Verbindung zwischen dem ersten PE und dem CE freigibt, wenn das Schleifendetektionspaket nicht empfangen wird, wenn die Blockfreigabezeit endet, nachdem das Schleifendetektionspaket mit der eingestellten Blockzeit gesendet worden ist.

7. "Provider Edge"-Vorrichtung (PE-Vorrichtung), die für ein virtuelles privates Netzwerk angepasst ist, **dadurch gekennzeichnet, dass** sie Folgendes umfasst:
ein Erzeugungsmodul (401), das so konfiguriert ist, dass es ein Schleifendetektionspaket erzeugt, wobei das Schleifendetektionspaket ein Sendeintervall des Schleifendetektionspakets und eine Blockpriorität einer Verbindung zwischen dem PE und einem "Customer Edge" (CE) trägt;
ein Sendemodul (402), das so konfiguriert ist, dass es das Schleifendetektionspaket entsprechend dem Sendeintervall an den CE sendet;
ein erstes Empfangsmodul (403), das so konfiguriert ist, dass es die Verbindung zwischen dem PE und dem CE blockiert, wenn es das von besagtem PE gesendete Schleifendetektionspaket empfängt; und
ein zweites Empfangsmodul, das so konfiguriert ist, dass es einen Blockierprozess entsprechend einer Blockpriorität einer Verbindung zwischen einem zweiten PE und dem CE, die in einem empfangenen Schleifendetektionspaket getragen wird, das vom zweiten PE gesendet wird, und entsprechend der Blockpriorität der Verbindung zwischen dem PE und dem CE ausführt, wenn das vom zweiten PE gesendete Schleifendetektionspaket empfangen wird,
wobei besagter Blockierprozess entsprechend der Blockpriorität ausgeführt wird, indem tybestimmt wird, ob die Blockpriorität der Verbindung zwischen dem ersten PE und dem CE geringer ist als die Blockpriorität der Verbindung zwischen dem zweiten PE und dem CE; und die Verbindung mit der geringeren Priorität blockiert wird.

8. Vorrichtung nach Anspruch 7, wobei das zweite Empfangsmodul Folgendes umfasst:
eine Gewinnungseinheit, die so konfiguriert ist, dass sie die Blockpriorität der Verbindung zwischen dem zweiten PE und dem CE, die im empfangenen Schleifendetektionspaket getragen wird, das vom zweiten PE gesendet wird, sowie die Blockpriorität der Verbindung zwischen dem ersten PE und dem CE gewinnt;
eine Bestimmungseinheit, die so konfiguriert ist, dass sie bestimmt, ob die Blockpriorität der Verbindung zwischen dem zweiten PE und dem CE geringer ist als die Blockpriorität der Verbindung zwischen dem PE und dem CE;
eine erste Blockiereinheit, die so konfiguriert ist, dass sie die Verbindung zwischen dem zweiten PE und dem CE blockiert, wenn die Blockpriorität der Verbindung zwischen dem zweiten PE und dem CE geringer ist als die Blockpriorität der Verbindung zwischen dem PE und dem CE;
eine zweite Blockiereinheit, die so konfiguriert ist, dass sie die Verbindung zwischen dem PE und dem CE blockiert, wenn die Blockpriorität der Verbindung zwischen dem PE und dem CE geringer ist als die Blockpriorität der Verbindung zwischen dem zweiten PE und dem CE; und
eine dritte Blockiereinheit, die so konfiguriert ist, dass sie den Blockierprozess entsprechend einer Verarbeitungsweise ausführt, die im Schleifendetektionspaket voreingestellt ist, das vom zweiten PE gesendet wird, wenn die Blockpriorität der Verbindung zwischen dem zweiten PE und dem CE gleich der Blockpriorität der Verbindung zwischen dem PE und dem CE ist.

9. Vorrichtung nach Anspruch 7, die weiterhin Folgendes umfasst:
ein Blockfreigabemodul, das so konfiguriert ist, dass es eine Blockzeit im Schleifendetektionspaket einstellt und das Schleifendetektionspaket mit der eingestellten Blockzeit an den CE sendet, wenn die Verbindung zwischen dem PE und dem CE ständig blockiert ist, die Blockzeit und eine Sendeperiode summiert, um eine Blockfreigabezeit zu gewinnen, und die Blockierung der Verbindung zwischen dem PE und dem CE freigibt, wenn das Schleifendetektionspaket nicht empfangen wird, wenn die Blockfreigabezeit endet, nachdem das Schleifendetektionspaket mit der eingestellten Blockzeit gesendet worden ist.

10. Computerprogrammprodukt, das Computerprogrammcode umfasst, der eine Computereinheit dazu bringt, dass sie alle Schritte der Ansprüche 1 bis 4 ausführt, wenn sie durch die Computereinheit ausgeführt werden.

## Revendications

1. Procédé de détection de boucle dans un réseau local privé virtuel, LAN, **caractérisé en ce qu'**il comprend les étapes suivantes :
générer (101), par un premier bord de fournisseur, PE, du réseau privé virtuel LAN, un paquet de détection de boucle, où le paquet de détection de boucle achemine un intervalle d'envoi du paquet de détection de boucle et une priorité de bloc d'une liaison entre le premier PE et un bord de client, CE ;
envoyer (102), par le premier PE, le paquet de détection de boucle au CE conformément à l'intervalle d'envoi ;
bloquer (103) la liaison entre le premier PE et le CE, si le premier PE reçoit le paquet de détection de boucle envoyé par le premier PE ; et
exécuter, par le premier PE, un processus de blocage conformément à une priorité de bloc d'une liaison entre un second PE et le CE acheminée dans un paquet de détection de boucle reçu envoyé par le second PE et à la priorité de bloc de la liaison entre le premier PE et le CE, si le premier PE reçoit le paquet de détection de boucle envoyé par le second PE,
où ledit processus de blocage selon la priorité de bloc est exécuté en déterminant si la priorité de bloc de la liaison entre le premier PE et le CE est inférieure à la priorité de bloc de la liaison entre le second PE et le CE ; et la liaison ayant la priorité la plus basse est bloquée.

2. Procédé selon la revendication 1, dans lequel l'exécution, par le premier PE, du processus de blocage, selon la priorité de bloc de la liaison entre le second PE et le CE acheminée dans le paquet de détection de boucle reçu envoyé par le second PE, et la priorité de bloc de la liaison entre le premier PE et le CE comprend les étapes suivantes :
obtenir, par le premier PE, la priorité de bloc de la liaison entre le second PE et le CE acheminée dans le paquet de détection de boucle reçu envoyé par le second PE et la priorité de bloc de la liaison entre le premier PE et le CE ;
déterminer, par le premier PE, si la priorité de bloc de la liaison entre le second PE et le CE est inférieure à la priorité de bloc de la liaison entre le premier PE et le CE ;
bloquer, par le premier PE, la liaison entre le second PE et le CE, si la priorité de bloc de la liaison entre le second PE et le CE est inférieure à la priorité de bloc de la liaison entre le premier PE et le CE ;
bloquer, par le premier PE, la liaison entre le premier PE et le CE, si la priorité de bloc de la liaison entre le premier PE et le CE est inférieure à la priorité de bloc de la liaison entre le second PE et le CE ; et
exécuter, par le premier PE, le processus de blocage, conformément à une manière de traitement prédéfinie dans le paquet de détection de boucle envoyé par le second PE, si la priorité de bloc de la liaison entre le second PE et le CE est égale à la priorité de bloc de la liaison entre le premier PE et le CE.

3. Procédé selon la revendication 1, comprenant en outre les étapes suivantes :
définir, par le premier PE, un temps de bloc dans le paquet de détection de boucle, et envoyer le paquet de détection de boucle avec le temps de bloc défini au CE, si la liaison entre le premier PE et le CE est bloquée de manière permanente ;
sommer, par le premier PE, le bloc de temps et une période d'envoi, de manière à obtenir un temps de libération de bloc ; et
libérer, par le premier PE, le bloc de la liaison entre le premier PE et le CE, si le paquet de détection de boucle n'est pas reçu lorsque le temps de libération de bloc prend fin après que le paquet de détection de boucle avec le temps de bloc défini a été envoyé.

4. Procédé selon la revendication 3, dans lequel lorsque le paquet de détection de boucle n'est pas complètement envoyé à une plage de liaison définie dans le paquet de détection de boucle dans une période d'envoi,
le premier PE calcule le nombre de périodes d'envoi requises pour envoyer complètement le paquet de détection de boucle à la plage de liaison définie dans le paquet de détection de boucle, et définit le nombre de périodes d'envoi dans le paquet de détection de boucle avec le temps de bloc défini ;
le premier PE somme un temps obtenu en multipliant le nombre de périodes d'envoi par la période d'envoi et le bloc de temps, de manière à obtenir un nouveau temps de libération de bloc ; et
le premier PE libère le bloc de la liaison entre le premier PE et le CE si le paquet de détection de boucle n'est pas reçu lorsque le nouveau temps de libération de bloc prend fin après que le paquet de détection de boucle avec le temps de bloc défini et le nombre de périodes d'envoi a été envoyé.

5. Système de détection de boucle dans un réseau local privé virtuel, LAN, **caractérisé en ce qu'**il comprend un premier bord de fournisseur, PE (301), et un bord de client, CE (302), où :
le premier PE est configuré pour générer un paquet de détection de boucle, où le paquet de détection de boucle achemine un intervalle d'envoi du paquet de détection de boucle et une priorité de bloc d'une liaison entre le premier PE et le CE, envoyer le paquet de détection de boucle au CE conformément à l'intervalle d'envoi, et bloquer la liaison entre le premier PE et le CE, si le premier PE reçoit le paquet de détection de boucle envoyé depuis le premier PE ; et
le CE est configuré pour recevoir le paquet de détection de boucle envoyé par le premier PE, et envoyer le paquet de détection de boucle au premier PE par l'intermédiaire d'une boucle si la boucle existe entre le CE et le premier PE ;
où le premier PE est en outre configuré pour exécuter un processus de blocage conformément à une priorité de bloc d'une liaison entre un second PE et le CE acheminée dans un paquet de détection de boucle reçu envoyé par le second PE, et la priorité de bloc de la liaison entre le premier PE et le CE, si le premier PE reçoit le paquet de détection de boucle envoyé par le second PE, où ledit processus de blocage selon la priorité de bloc est exécuté en déterminant si la priorité de bloc de la liaison entre le premier PE et le CE est inférieure à la priorité de bloc de la liaison entre le second PE et le CE ; et la liaison ayant la priorité la plus basse est bloquée.

6. Système selon la revendication 5, dans lequel le premier PE est en outre configuré pour définir un temps de bloc dans le paquet de détection de boucle et pour envoyer le paquet de détection de boucle avec le temps de bloc défini au CE si la liaison entre le premier PE et le CE est bloquée de manière permanente, sommer le temps de bloc et une période d'envoi pour obtenir un temps de libération de bloc, et libérer le bloc de la liaison entre le premier PE et le CE si le paquet de détection de boucle n'est pas reçu lorsque le temps de libération de bloc prend fin après que le paquet de détection de boucle avec le temps de bloc défini a été envoyé.

7. Dispositif de bord de fournisseur, PE, conçu pour un réseau privé virtuel, **caractérisé en ce qu'**il comprend :
un module de génération (401), configuré pour générer un paquet de détection de boucle, où le paquet de détection de boucle achemine un intervalle d'envoi du paquet de détection de boucle et une priorité de bloc d'une liaison entre le PE et un bord de client, CE;
un module d'envoi (402), configuré pour envoyer le paquet de détection de boucle au CE conformément à l'intervalle d'envoi ;
un premier module de réception (403), configuré pour bloquer la liaison entre le PE et le CE, en cas de réception du paquet de détection de boucle envoyé par ledit PE ; et
un second module de réception, configuré pour exécuter un processus de blocage conformément à une priorité de bloc d'une liaison entre un second PE et le CE acheminée dans un paquet de détection de boucle reçu envoyé par le second PE et à la priorité de bloc de la liaison entre le PE et le CE, en cas de réception du paquet de détection de boucle envoyé par le second PE, où ledit processus de blocage selon la priorité de bloc est exécuté en déterminant si la priorité de bloc de la liaison entre le premier PE et le CE est inférieure à la priorité de bloc de la liaison entre le second PE et le CE ; et la liaison ayant la priorité la plus basse est bloquée.

8. Dispositif selon la revendication 7, dans lequel le second module de réception comprend :
une unité d'obtention, configurée pour obtenir la priorité de bloc de la liaison entre le second PE et le CE acheminée dans le paquet de détection de boucle reçu envoyé par le second PE et la priorité de bloc de la liaison entre le PE et le CE ;
une unité de détermination, configurée pour déterminer si la priorité de bloc de la liaison entre le second PE et le CE est inférieure à la priorité de bloc de la liaison entre le PE et le CE ;
une première unité de blocage, configurée pour bloquer la liaison entre le second PE et le CE, si la priorité de bloc de la liaison entre le second PE et le CE est inférieure à la priorité de bloc de la liaison entre le PE et le CE ;
une seconde unité de blocage, configurée pour bloquer la liaison entre le PE et le CE, si la priorité de bloc de la liaison entre le PE et le CE est inférieure à la priorité de bloc de la liaison entre le second PE et le CE ; et
une troisième unité de blocage, configurée pour exécuter le processus de blocage, conformément à une manière de traitement prédéfinie dans le paquet de détection de boucle envoyé par le second PE, si la priorité de bloc de la liaison entre le second PE et le CE est égale à la priorité de bloc de la liaison entre le PE et le CE.

9. Dispositif selon la revendication 7, comprenant en outre :
un module de libération de bloc, configuré pour définir un temps de bloc dans le paquet de détection de boucle et envoyer le paquet de détection de boucle avec le temps de bloc défini au CE si la liaison entre le PE et le CE est bloquée de manière permanente, sommer le temps de bloc et une période d'envoi pour obtenir un temps de libération de bloc, et libérer le bloc de la liaison entre le PE et le CE si le paquet de détection de boucle n'est pas reçu lorsque le temps de libération de bloc prend fin après que le paquet de détection de boucle avec le temps de bloc défini a été envoyé.

10. Produit programme informatique comprenant un code de programme informatique qui entraînera une unité informatique à exécuter toutes les étapes des revendications 1 à 4 lorsqu'elles sont exécutées par l'unité informatique.
